# EUROPEAN PATENT SPECIFICATION

(11) **EP 0 975 814 B1**
(45) Date of publication and mention of the grant of the patent: **07.11.2001**
(21) Application number: 98913801.1
(22) Date of filing: 16.04.1998
(51) Int. Cl.: C21D 1/26

(54) **HEAT TREATMENT OF STEEL**
WÄRMEBEHANDLUNG VON STAHL
TRAITEMENT THERMIQUE D'ACIER

(30) Priority: 17.04.1997 FI 971625
(43) Date of publication of application: 02.02.2000
(73) Proprietor: Aspector OY, 91100 Ii (FI)
(72) Inventor: LEINONEN, Jouko, FIN-90550 Oulu (FI)
(74) Representative: Laurinolli, Tapio Kullervo
(86) International application number: FI9800334
(87) International publication number: WO9848061

(56) References cited:
- DE-A- 3 113 822
- DE-C- 418 124
- US-A- 3 178 324
- US-A- 3 201 288
- US-A- 3 278 345
- US-A- 3 701 694
- US-A- 4 040 872
- US-A- 4 457 789
- US-A- 4 523 072
- PATENT ABSTRACTS OF JAPAN vol. 008, no. 187 (C-240), 28 August 1984 & JP 59 080718 A (SUMITOMO KINZOKU KOGYO KK), 10 May 1984,
- PATENT ABSTRACTS OF JAPAN vol. 018, no. 145 (C-1178), 10 March 1994 & JP 05 320775 A (KAWASAKI STEEL CORP), 3 December 1993,

## Description

The invention is related to heat treatment of steels, and especially to heat treatment of essentially ferritic steels during the final stage of a manufacturing process, or thereafter.

Low carbon steels are the most widely manufactured and most frequently used steels in the world. The most important mechanical properties thereof: tensile strength, yield strength and impact toughness, are usually good or at least satisfactory. Generally, good weldability is also seeked for in the manufacturing of this kind of steels, because these steels are usually intended for different kinds of steel structures. Good weldability, i.e. low hardenability in practice, will be achieved by low content of carbon and other alloying elements, in particular. Carbon content in the steels of good weldability is usually not more than 0.25 %, and the steel industry tries to get carbon content still lower, often below 0.1 %. Lower carbon content, in itself, impairs strength of steel but, as already mentioned, improves weldability and usually also impact toughness.

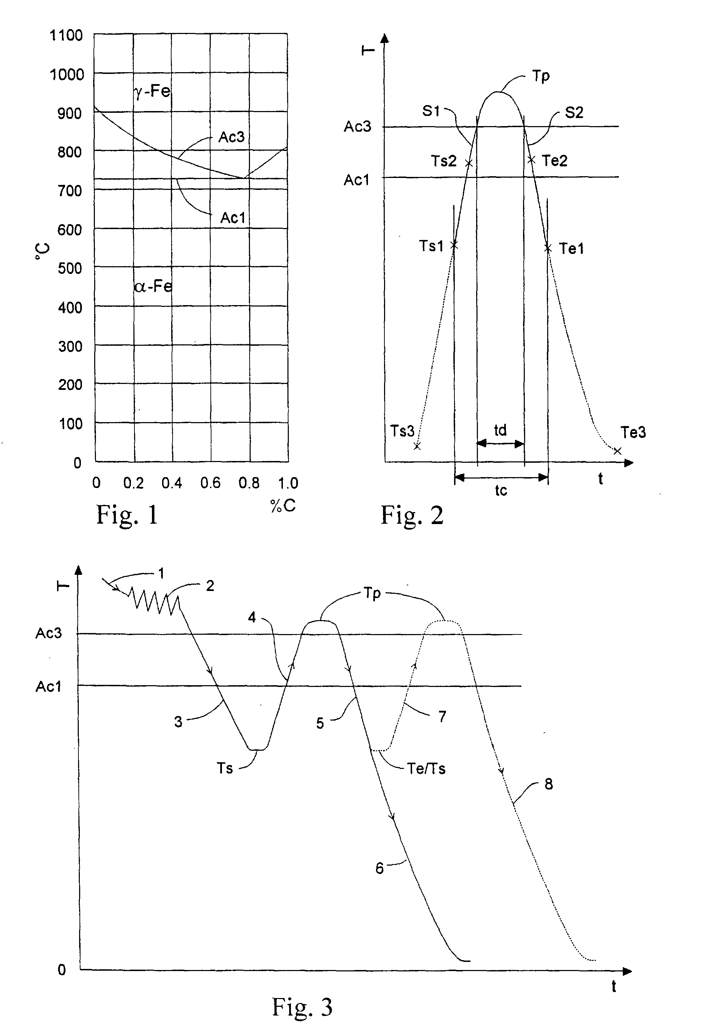

The Fe-C equilibrium diagram for carbon contents 0 to 1.0 % is presented in Figure 1. Below the Ac1 temperature the microstructure of steel usually consists of ferrite (α-Fe) and partially of pearlite (α-Fe + Fe₃C), between the temperatures Ac1 and Ac3 the microstructure contains austenite (γ-Fe) in addition to ferrite, and above the Ac3 temperature the structure is fully austenitic. The Ac1 temperature is approximately 730 °C, and the Ac3 temperature depends mainly on carbon content of steel. For pure iron the Ac3 temperature is about 910 °C, for a steel containing 0.1 % carbon it is about 850 °C, and for a steel containing 0.4 % carbon it is about 780 °C.

A low carbon steel is usually manufactured by casting the liquid steel and by shearing the solidified steel to billets or slabs, which are heated to a temperature of 1200 to 1300 °C and then hot rolled to get a thinner product, with concurrent cooling of the steel. At the end of the process, the plate, bar, etc. is usually cooled to room temperature. Some steels are normalized after hot rolling, i.e. they are heated in a furnace to a temperature of about 30 to 50 °C above Ac3 (often to 870 to 920 °C) and held at this temperature, normally 20 to 30 minutes, for making the microstructure more uniform and for refining the grain size, whereby strength and impact toughness are typically improved. The steel to be normalized is normally cooled after hot rolling to about 500 °C, from which it is heated back to the single-phase austenite field above the Ac3 temperature. Thereafter, the steel is normally allowed to cool freely in air to room temperature. The normalization may also be intensified by accelerated cooling, whereby grain growth during the cooling is essentially hindered and smaller grain size is achieved.

Better hot rolling and fine grain treatments have been developed to compensate for the impaired strength caused by reduced carbon contents. The grain size of the microstructure, which is generally ferritic, produced by these treatments is smaller than normally, which improves strength and impact toughness of the steel. Very fine carbide, nitride and carbonitride precipitates of the alloying elements, high density of dislocations in ferritic structure, and fine grained bainitic structure also affect the strength of the steel.

Small amounts, usually not more than 0.1 %, of niobium, titanium, or vanadium are added to the melt of so called fine-grain steels. At certain temperatures these alloying elements react with carbon and nitrogen to form above-mentioned carbide, nitride, or carbonitride precipitates, which prevent grain boundaries from moving and thus grains from growing at high temperatures.

Thermomechanical rolling process (TMCP) is an improved hot rolling process, and steels treated by this process, TM steels, are used for demanding applications, e. g. for bridges. Hot rolling is accomplished at lower temperatures than normally, below 1200 °C, and the last deformation is performed at temperatures near the Ac3 temperature, either above it in the austenitic field or a little below Ac3, with austenitic microstructure including some ferrite, too. After hot rolling the steel is usually cooled effectively to about 500 °C, and then more slowly to room temperature. Ferritic grain size in steels produced conventionally is 0.010 to 0.030 mm, but the grain size in TM steels is usually 0.005 to 0.010 mm, and at its best 0,004 mm.

The optimum combination of strength, impact toughness, and weldability of a steel can be achieved by using thermomechanical rolling, and the steel research efforts all around the world are widely aimed at developing and improving this process further.

A heat treatment method producing very fine grain size is presented in the U.S. Patent Re. 27,505 (Grange et al.). This patent presents a method, in which steel is heated at least twice to above its Ac3 temperature for a short time. Heating to not more than 150 °F above the Ac3 temperature is preferred. Rapid cooling is required in all but the last cycle to transform austenite to martensite, bainite or a mixture thereof. The method is presented to be applied to medium and high-carbon steels, preferably.

An object of the present invention is to provide a heat treatment method, by which mechanical properties of steels can be improved by simple measures either during the final steel manufacturing stage or after the manufacturing stages. A further object of the invention is to provide a solution, which can be used instead of thermomechanical rolling and fine-grain treatment, or together therewith, to improve properties of steels, especially strength and impact toughness of low-carbon structural steels.

Heat treatment of low-carbon, unalloyed or low-alloyed steels according to the invention is characterized in that it includes, as the last stage in which the temperature of the steel is elevated above the Ac3 temperature, one or more cycles in which: the steel is heated from a temperature below the Ac1 temperature, at which the structure of the steel is essentially ferritic, or from a higher temperature, at which not more than one half of the structure of the steel consists of austenite, to a temperature above the Ac3 temperature; and the steel is cooled to a temperature below the Ac1 temperature, at which the structure of the steel is essentially ferritic, or to a higher temperature, at which not more than one half of the structure of the steel consists of austenite; so that the holding time above the Ac3 temperature is not more than 5 minutes, and that the heating and the cooling are carried out fast enough so that grain growth during them is essentially hindered.

In a preferred heat treatment according to the invention steel is heated above the Ac3 temperature typically for a few seconds or for a few tens of seconds. In principle, only a sufficient time to transform the microstructure fully to austenite is needed. It is often advantageous to use so long a time that alloying elements have enough time to be redistributed in the steel, i.e. the austenitic structure has time to become homogenized. A longer time may be used, if the temperature is rather low, near the Ac3 temperature, and if the steel does not have tendency to austenite grain growth. The steel can be heated to a temperature of 850 to 1050 °C, depending on conditions. An advantageous temperature range from which the heating may be started, e.g. after normalizing or hot rolling, is 500 to 720 °C. The heating may be started also from a higher temperature, even from a temperature above the Ac1 temperature, from such a temperature, however, at which not more than one half of the structure consists of austenite. The heating may be started also from a lower temperature, e.g. from room temperature.

The number of the heating cycles may be one, two, or three, and the last cycle has to be the final heat treatment in which the steel is heated to the Ac3 temperature. Hot rolling may be combined with the heating cycles.

Heating may be carried out by induction heating. The temperature of the steel achieved by induction heating may be maintained by induction heating or in some other way, in an air furnace, for example.

The steel to which the heat treatment is applied is preferably a low-carbon steel with carbon content below 0.25 %. Carbon content of low-carbon steels is nowadays often about 0,10 %, and these steels are mostly unalloyed or low-alloyed ones. As stated above, the heat treatment of the invention may be applied together with hot rolling and fine-grain treatment, and after this treatment cold rolling or heat treatments may be applied at lower temperatures in which no danger of grain growth exists.

The invention and some examples of performing and applying the invention are described in detail in the following with reference to the appended drawings, in which:
Figure 1 presents, as an information helping to understand the desription of the invention, the Fe-C equilibrium diagram for carbon contents of 0 to 1.0 %;
Figure 2 is a diagram presenting schematically a cycle of the heat treatment according to the invention; and
Figure 3 presents schematically an embodiment of the heat treatment according to the invention.

Figure 2 presents generally a cycle of the heat treatment according to the invention. It is essential that the steel is heated to a temperature above the Ac3 temperature. The maximum temperature Tp is generally between 850 and 1050 °C, and it is selected to be at a convenient level according to the carbon content and some other properties of the steel. For low-carbon steels the temperature may be as low as 800 °C, and for medium-carbon steels as low as 750 °C. The annealing time td of a few seconds or some tens of seconds is often long enough. It can also be a few minutes but not more than 5 minutes, however. It is advantageous to start the heating cycle from the temperature range 500 to 720 °C, from the temperature Ts1 shown in the diagram, as it can be done, for example, when the heating in accordance with the invention is carried out immediately after hot rolling or normalizing. The heating can also be started from a higher temperature, even from a temperature Ts2 above the Ac1 temperature, in which not more than one half of the microstructure consists of austenite. Similarly, the heating can be started from a lower temperature, e.g. from the room temperature Ts3. The heating cycle may also be ended to any temperature range mentioned above, irrespective of from which temperature the cycle was started. The temperatures Te1, Te2, and Te3 shown in the diagram of Figure 2 represent different end temperature ranges. The heating and cooling stages, S1 and S2, respectively, are preferably fast enough especially near the Ac3 temperature, so that grain growth which would occur is as little as possible. Some experimental heating and cooling rates are presented later. The duration of the heating cycle as a whole, tc, can be only ten or a few tens of seconds.

When a steel is heated above the Ac1 and Ac3 temperatures for a short annealing, each ferrite and perlite grain is split to some very small austenite grains, which soon will start to grow due to the high temperature. When this kind of structure containing small austenite grains is cooled, preferably below the Ac1 temperature, each austenite grain is split to some smaller grains, usually ferrite and pearlite grains. It has been noted that the final grain size is the finer the faster is on one hand the heating above the Ac3 temperature and on the other hand the cooling after heating and annealing, preferably to a temperature in the range 720 to 500 °C below the Ac1 temperature. According to various investigations and estimations, grain size of austenite during hot rolling is approximately 0.020 to 0.030 mm. During the heating and annealing according to the invention, remarkably finer austenite grain size of 0.010 mm or less is achieved, and thus the ferrite and perlite grain sizes after cooling and transformation are finer than in the case of hot rolling.

In Figure 3 an embodiment is presented in which hot rolling 2 is carried out during cooling 1 when approaching the Ac3 temperature. After hot rolling, the steel is cooled (reference sign 3) to the temperature Ts ranging from 500 to 720 °C. After cooling 3, a heating phase 4 according to the invention will begin. The steel to be heat treated may contain, for example, 0.1 % carbon and 1.0 % manganese, whereupon the peak temperature Tp may be about 890 °C. The steel can then be cooled (reference sign 5) relatively fast to the temperature range 500 to 720 °C and is then allowed to cool further (reference sign 6) to room temperature. Alternatively, a new heating stage 7 according to the invention may be started from the temperature Te/Ts, after which the steel is cooled (reference sign 8) to room temperature. There may be also more heating cycles than two.

Advantageously, hot rolling may be combined with heating cycles according to the invention. Hot rolling is recommended for the steels in which no recrystallization occurs during hot rolling or thereafter.

Advantageously, the heat treating according to the invention may also be used to improve mechanical properties of weld joints. It is well known that the grain size of the parent metal near the fusion boundary increases significantly during welding, the largest grain size being often of the order of 0.100 mm, for example. Also the grain size of the weld metal is quite big. These large grains may be refined by treating the weld joint locally, or the welded part or structure as a whole, with the heat treating method of the invention. At the same time, meachanical properties, yield strength and impact toughness, for example, are improved.

In the following there are presented some examples of experimental results, which have been obtained by applying the method of the invention to steels of different types:

### Example 1: Hot rolled carbon-manganese steel, EN 10025-S355JO

The carbon content of this steel is 0.15 % and manganese content 1.2 %. In a test, this steel was heated by induction method so that the steel was about four seconds above the Ac3 temperature, the peak temperature being 950 °C. Ferrite grain size before heat treating was about 0.015 mm (ASTM No. 9). After the heat treatment, the grain size of the steel was 0.002 to 0.003 mm (ASTM No. 14) at the minimum. The hardness of the steel increased from 180 HV5 to 220 HV5. The tensile strength of a steel is improved in proportion to the hardness, and in this case the tensile strength was improved from 580 MPa to 700 MPa. In comparison, the same steel was normalized in an air furnace resulting in the grain size of about 0.010 mm (ASTM No. 10). When the total time of heating and annealing of a small test piece was limited to 3 minutes, the grain size of the resulting microstructure was about 0.007 mm (ASTM No. 11).

Test series were carried out for the same steel also with a thermomechanical simulation equipment, the aim being to arrange the heating and cooling circumstances in the simulation equipment as much as possible similar to those in the induction heating. The heating rate from room temperature to annealing temperature was 100 °C/s, the cooling rate from the annealing temperature to 600 °C was 60 °C/s, and the cooling rate further to room temperature was 10 °C/s. In one test series, variation of grain size was studied when the annealing temperature was varied within the range 860 to 960 °C, the annealing time being 20 seconds (Table 1). In another test series variation of grain size was studied when the annealing time was varied within the range 0 to 20 seconds, the annealing temperature being 900 °C (Table 2). In comparison, the steel was also normalized in an air furnace, in which the temperature was 900 °C and the duration of the annealing was 10 minutes, after which air cooling followed. The result is included in Table 2.

**Table 1:**

| EN 10025-S355JO; annealing time 20 seconds | | | | | | |
|---|---|---|---|---|---|---|
| Annealing temperature, °C | 860 | 880 | 900 | 920 | 940 | 960 |
| Grain size, mm | 0.004 | 0.004 | 0.005 | 0.006 | 0.007 | 0.008 |

**Table 2:**

| EN 10025-S355JO; annealing temperature 900 °C | | | | |
|---|---|---|---|---|
| Annealing time, s | 0 | 2 | 20 | 600 (normalization) |
| Grain size, mm | 0.004 | 0.004 | 0.005 | 0.010 |

### Example 2: Medium-carbon hot rolled steel EN 10083-1

Carbon content of this medium-carbon steel is about 0.4 to 0.5 %, and the structure is normally hot rolled, normalized, and quenched or quenched and tempered. There are no other alloying elements but silicon and manganese in this steel. Tensile strength is fairly high, as it is generally in medium-carbon steels, usually at least 560 to 780 MPa depending on phases in the microstructure. The initial ferrite grain size was about 0.020 mm (ASTM No. 8). After induction heating and cooling in accordance with the invention the grain size was about 0.007 mm (ASTM No. 11).

### Example 3: Fine-grain structural steel

This steel contains small amounts of silicon and manganese and also 0.08 % carbon and 0.05 % niobium. Ferrite grain size after hot rolling was 0.025 mm, and during normalizing it was reduced to 0.007 mm. The grain size was further reduced, as the cooling after normalizing was stopped at 600 °C and the steel was immediately heated to 1000 °C at the rate of 120 °C/s and then cooled to room temperature at the rate of 60 °C/s. The grain size after this treatment was 0.004 to 0.005 mm.

In another test for this steel it was shown that a short annealing of only 2 seconds at 900 °C was not able to result in a homogeneous austenite structure. This appeared as an inhomogeneity of ferritic-pearlitic microstructure, which had been formed from austenite. A homogeneous structure may be achieved with longer annealing times and / or higher annealing temperatures, as in the above example with heating to 1000 °C and then immediately cooling. The best annealing temperature for this steel would be between 900 and 1000 °C.

The invention, some embodiments thereof, and examples based on experimental results with different kinds of steels are presented above. The examples show that the accomplishment of the invention may vary widely depending, for example, on carbon content of a steel. A person skilled in the art understands that also contents of other alloying elements in a steel have their effect on the most suitable parameters of the treatment according to the invention.

The invention may be varied within the scope defined in the appended claims.

## Claims

1. Heat treatment of low-carbon, unalloyed or low-alloyed steels, **characterized in that** it includes, as the last stage in which the temperature of the steel is elevated above the Ac3 temperature, one or more cycles in which:
the steel is rapidily heated from a temperature below the Ac1 temperature, at which the structure of the steel is essentially ferritic, or from a higher temperature, at which not more than one half of the structure of the steel consists of austenite, to a temperature above the Ac3 temperature, the heating being rapid for hindering grain growth during heating;
the steel is maintained above the Ac3 temperature for a time sufficient to transform the microstructure fully to austenite and to allow homogenisation of the austenitic structure, the time being restricted for hindering grain growth and being not more than 5 minutes; and
the steel is rapidly cooled to a temperature below the Ac1 temperature, at which the structure of the steel is essentially ferritic, or to a higher temperature, at which not more than one half of the structure of the steel consists of austenite, the cooling being rapid for hindering grain growth and for resulting in fine ferrite grains during cooling and transformation of austenite to ferrite.

2. Heat treatment of low-carbon, unalloyed or low-alloyed steels according to claim 1, **characterized in that** the heating rate is of the order of 100 °C/s.

3. Heat treatment of low-carbon, unalloyed or low-alloyed steels according to claim 1, **characterized in that** the cooling rate is of the order of 50 °C/s.

4. Heat treatment of low-carbon, unalloyed or low-alloyed steels according to claim 1, **characterized in that** it is carried out after hot rolling or a conventional heat treatment, like normalizing.

5. Heat treatment of low-carbon, unalloyed or low-alloyed steels according to claim 1, **characterized in that** it includes 1 to 3 cycles.

6. Heat treatment of low-carbon, unalloyed or low-alloyed steels according to claim 1, **characterized in that** the temperature below the Ac1 temperature is 500 to 720 °C.

7. Heat treatment of low-carbon, unalloyed or low-alloyed steels according to claim 1, **characterized in that** the temperature above the Ac3 temperature is 850 to 1050 °C with holding time being typically of the order of a few seconds or a few tens of seconds.

8. Heat treatment of low-carbon, unalloyed or low-alloyed steels according to claim 1, **characterized in that** hot rolling is included in the cycle.

9. Heat treatment of low-carbon, unalloyed or low-alloyed steels according to claim 1, **characterized in that** the heating is induction heating.

10. Heat treatment of low-carbon, unalloyed or low-alloyed steels according claim 1, **characterized in that** carbon content of the steel is not more than 0.25 %.

11. Heat treatment of any claim 1, 2, 3, 5, 6, 7, 9 and 10, **characterized in that** it is applied to a weld joint or a welded structure.

## Patentansprüche

1. Wärmebehandlung von kohlenstoffarmen, unlegierten oder niedrig legierten Stählen, **dadurch gekennzeichnet, dass** sie die letzte Stufe ist, wo die Temperatur von einem Stahl über die Ac3 Temperatur erwärmt ist, und eine oder mehrere Zyklen enthält, wo:
der Stahl schnell von einer Temperatur unter der Ac1 Temperatur, wo die Mikrostruktur von dem Stahl wesentlich ferritisch ist, oder von einer hohen Temperatur wo nicht mehr als eine Hälfte von der Mikrostruktur Austenit ist, auf eine Temperatur oberhalb der Ac3 Temperatur erwärmt ist, so dass die Erwärmung genügend schnell ist, um ein Kornwachstum während der Erwärmung zu verhindern;
der Stahl oberhalb der Ac3 Temperatur eine genügend lange Zeit gehalten ist, um die Umwandlung zu Austenit vollständig zu sein und die austenitische Mikrostruktur vergleischmässigen zu lassen, und die Zeit zu 5 Minuten oder kürzer beschränkt ist, um ein Kornwachstum zu verhindern; und
der Stahl schnell zu einer Temperatur unter der Ac1 Temperatur gekühlt ist, wo die Mikrostruktur von dem Stahl wesentlich ferritisch ist, oder zu einer hohen Temperatur wo nicht mehr als eine Hälfte von der Mikrostruktur Austenit ist, so dass die Abkühlung genügend schnell ist, um ein Kornwachstum während der Abkühlung zu verhindern, und um eine feine ferritische Korngrösse während der Abkühlung und der Umwandlung von Austenit zur Ferrit zu verursachen.

2. Wärmebehandlung von kohlenstoffarmen, unlegierten oder niedrig legierten Stählen nach Anspruch 1, **dadurch gekennzeichnet, dass** die Erwärmungsgeschwindigkeit etwa 100 °C/s ist.

3. Wärmebehandlung von kohlenstoffarmen, unlegierten oder niedrig legierten Stählen nach Anspruch 1, **dadurch gekennzeichnet, dass** die Abkühlungsgeschwindigkeit etwa 50 °C/s ist.

4. Wärmebehandlung von kohlenstoffarmen, unlegierten oder niedrig legierten Stählen nach Anspruch 1, **dadurch gekennzeichnet, dass** sie nach dem Warmwalzen oder nach einer gewohnheitsmässigen Wärmebehandlung ausgeführt ist.

5. Wärmebehandlung von kohlenstoffarmen, unlegierten oder niedrig legierten Stählen nach Anspruch 1, **dadurch gekennzeichnet, dass** sie 1, 2 oder 3 Zyklen enthält.

6. Wärmebehandlung von kohlenstoffarmen, unlegierten oder niedrig legierten Stählen nach Anspruch 1, **dadurch gekennzeichnet, dass** die Temperatur unter der Ac1 Temperatur von 500 bis 720 °C ist.

7. Wärmebehandlung von kohlenstoffarmen, unlegierten oder niedrig legierten Stählen nach Anspruch 1, **dadurch gekennzeichnet, dass** die Temperatur oberhalb der Ac3 Temperatur von 850 bis 1050 °C ist und die Haltezeit typisch etwa einige Sekunden oder einige zu zehnen Sekunden ist.

8. Wärmebehandlung von kohlenstoffarmen, unlegierten oder niedrig legierten Stählen nach Anspruch 1, **dadurch gekennzeichnet, dass** das Warmwalzen in dem Zyklus enthalten ist.

9. Wärmebehandlung von kohlenstoffarmen, unlegierten oder niedrig legierten Stählen nach Anspruch 1, **dadurch gekennzeichnet, dass** die Erwärmung Induktionerwärmung ist.

10. Wärmebehandlung von kohlenstoffarmen, unlegierten oder niedrig legierten Stählen nach Anspruch 1, **dadurch gekennzeichnet, dass** der Kohlenstoffgehalt von dem Stahl nicht mehr als 0.25 % ist.

11. Wärmebehandlung nach Ansprüchen 1, 2, 3, 5, 6, 7, 9 und 10, **dadurch gekennzeichnet, dass** sie zu einer Schweissverbindung oder zu einem geschweissten Konstruktion appliziert ist.

## Revendications

1. Traitement thermique des aciers à faible teneur en carbone, non alliés ou faiblement alliés, **caractérisé en ce qu'**il comprend, en tant que dernier stade dans lequel la température de l'acier est élevée au-dessus de la température Ac3, un ou plusieurs cycles dans lesquels :
l'acier est rapidement chauffé à partir d'une température au-dessous de la température Ac1, à laquelle la structure de l'acier est sensiblement ferretique, ou d'une température plus élevée, à laquelle pas plus qu'une moitié de la structure de l'acier consiste en austénite, jusqu'à une température au-dessus de la température Ac3, le chauffage étant rapide afin d'empêcher le grossissement du grain au cours du chauffage ;
l'acier est maintenu au-dessus de la température Ac3 pendant une durée suffisante pour transformer la microstructure complètement en austénite et pour permettre la homo-généisation de la structure austénitique, la durée étant limitée pour empêcher le grossissement du grain et elle n'est pas plus que 5 minutes ; et
l'acier est rapidement refroidi à une température au-dessous de la température Ac1, à laquelle la structure de l'acier est sensiblement ferretique, ou à une température plus élevée, à laquelle pas plus qu'une moitié de la structure de l'acier consiste en austénite, le refroidissement étant rapide afin d'empêcher le grossissement du grain et pour aboutir à des grains de ferrite fins au cours du refroidissement et à la transformation de l'austénite en ferrite.

2. Traitement thermique des aciers à faible teneur en carbone, non alliés ou faiblement alliés selon la revendication 1, **caractérisé en ce que** la vitesse de chauffage est de l'ordre de 100 °C/s.

3. Traitement thermique des aciers à faible teneur en carbone, non alliés ou faiblement alliés selon la revendication 1, **caractérisé en ce que** la vitesse de refroidissement est de l'ordre de 50 °C/s.

4. Traitement thermique des aciers à faible teneur en carbone, non alliés ou faiblement alliés selon la revendication 1, **caractérisé en ce qu'**il est mis en oeuvre après un laminage à chaud ou un traitement thermique classique, comme la normalisation.

5. Traitement thermique des aciers à faible teneur en carbone, non alliés ou faiblement alliés selon la revendication 1, **caractérisé en ce qu'**il comprend de 1 à 3 cycles.

6. Traitement thermique des aciers à faible teneur en carbone, non alliés ou faiblement alliés selon la revendication 1, **caractérisé en ce que** la température au-dessous de la température Ac1 est comprise entre 500 °C et 720 °C.

7. Traitement thermique des aciers à faible teneur en carbone, non alliés ou faiblement alliés selon la revendication 1, **caractérisé en ce que** la température au-dessus de la température Ac3 est comprise entre 850 °C et 1050 °C avec une durée de maintien typiquement de l'odre de quelques secondes ou quelques dixièmes de secondes.

8. Traitement thermique des aciers à faible teneur en carbone, non alliés ou faiblement alliés selon la revendication 1, **caractérisé en ce que** le cycle comprend le laminage à chaud.

9. Traitement thermique des aciers à faible teneur en carbone, non alliés ou faiblement alliés selon la revendication 1, **caractérisé en ce que** le chauffage est un chauffage par induction.

10. Traitement thermique des aciers à faible teneur en carbone, non alliés ou faiblement alliés selon la revendication 1, **caractérisé en ce que** la teneur en carbone de l'acier n'est pas plus que 0,25 %.

11. Traitement thermique selon l'une quelconque des revendications 1, 2, 3, 5, 6, 7, 9 et 10, **caractérisé en ce qu'**il est appliqué à un joint de soudure ou à une structure soudée.
